# EUROPEAN PATENT APPLICATION

(11) **EP 4 382 182 A1**
(43) Date of publication of application: **12.06.2024**
(21) Application number: 23211419.9
(22) Date of filing: 22.11.2023
(51) Int. Cl.: A63F 13/428, A63F 13/213, A63F 13/215, A63F 13/424, A63F 13/67, G06F 3/01, G06T 13/40

(54) **DEVICE AND METHOD FOR CONTROLLING A VIRTUAL AVATAR ON AN ELECTRONIC DEVICE**

(30) Priority: 08.12.2022 GB 202218463
(71) Applicant: Sony Interactive Entertainment Europe Limited, London W1F 7LP (GB); Sony Interactive Entertainment LLC, San Mateo, CA 94404 (US)
(72) Inventor: STEMPLE, Lloyd Preston, London, W1F 7LP (GB); VISCIGLIA, Aron Giuseppe, London, W1F 7LP (GB); KAWAMURA, Daisuke, San Mateo, 94404 (US); BHAT, Ramanath, San Mateo, 94404 (US); LEYTON, Pedro Federico Quijada, London, W1F 7LP (GB); UBERTI, David Erwan Damien, London, W1F 7LP (GB)
(74) Representative: Murgitroyd & Company

(57) **Abstract**

There is described a computer-implemented method for controlling a virtual avatar on an electronic device, the method comprising; providing a virtual avatar associated with a user, wherein the virtual avatar is associated with a plurality of poses and a plurality of animations; receiving input data associated with the user from at least one input source; processing the input data, the input data comprising images of the user and/or audio data captured from the user; determining a user mannerism from the processed input data; and updating at least one of the plurality of poses and/or animations of the virtual avatar, or creating a new pose and/or animation, to apply the user mannerism to the virtual avatar. There is also described a computing device configured to carry out the computer-implemented method.

## Description

### Field of the Invention

The present invention relates to a computer-implemented method. The present invention also relates to a computing device configured to carry out a computer-implemented method.

### Background

A virtual avatar is a graphical representation of a user's character on a digital platform. A virtual avatar can have a two-dimensional form (e.g. an image or icon) or a three-dimensional form (e.g. a character in a computer game).

It is known for virtual avatars to be partially customisable by the user. Advantageously, using a virtual avatar rather than an image or video of the user has allowed the user to maintain some anonymity in the digital world. The use of virtual avatars is not limited to gaming, as increasingly virtual avatars are being used to represent users in digital events, meetings, and in interactive training exercises.

As technology has progressed, virtual avatars have become more advanced and more life-like. However, customisation of a virtual avatar often requires the user to manually select features from a predefined list, with stock animations and poses used to animate the virtual avatar. Therefore, there is a limit to the degree of personalisation that is afforded.

Objects and aspects of the present claimed disclosure seek to alleviate at least these problems with the prior art.

### Summary

According to a first aspect of the present disclosure, there is provided a computer-implemented method for controlling a virtual avatar on an electronic device, the method comprising: providing a virtual avatar associated with a user, wherein the virtual avatar is associated with a plurality of poses and a plurality of animations; receiving input data associated with the user from at least one input source; processing the input data, the input data comprising images of the user and/or audio data captured from the user; determining a user mannerism from the processed input data; and updating at least one of the plurality of poses and/or animations of the virtual avatar, or creating a new pose and/or animation, to apply the user mannerism to the virtual avatar.

By applying the user mannerism to the virtual avatar, a more realistic and life-like virtual avatar is provided. Further, the virtual avatar is updated automatically, without the need for user interaction, thereby providing a more efficient method of virtual avatar personalisation.

Optionally, the audio data may be captured by a microphone associated with the user. Optionally, audio input data may be received from an electronic device or a computing device.

Optionally, the images of the user may comprise an image of the head and/or body of the user and at least a portion of their surroundings.

Optionally, the method comprises combining the determined user mannerism with a predefined pose and/or animation. Optionally, combining the determined user mannerism with a predefined pose and/or animation comprises supressing at least one feature of the predefined pose and/or animation. Optionally, combining the determined user mannerism with a predefined pose and/or animation comprises supressing at least one feature of the determined user mannerism.

Optionally, determining the user mannerism comprises: identifying a user characteristic from the input data.

The method may include detecting a frequency of the identified user characteristic, wherein if the frequency exceeds a predetermined limit the user characteristic is determined to be a user mannerism. In some embodiments, the user characteristic may be an eye movement, head movement, facial expression and/or sound.

Optionally, detecting whether the user characteristic exceeds a predetermined threshold, wherein if user characteristic exceeds the predetermined threshold the user characteristic is determined to be a user mannerism. Optionally, the predetermined threshold comprises a plurality of predetermined thresholds. Optionally, each predetermined threshold of the plurality of predetermined thresholds is defined by an emotion and/or avatar state. Optionally, each of the plurality of predetermined thresholds may comprise a relative distance between one or more features on the user's face and/or body. Optionally, the plurality of predetermined thresholds may comprise the presence and/or absence of a user characteristic.

Optionally, determining the user mannerism comprises comparing at least a portion of the input data to input data received from one or more other users.

Optionally, the method further comprises characterising at least a portion of the input data as a user mannerism based on the result of the comparison. Optionally, the method further comprises characterising at least a portion of the input data as a common mannerism, and therefore not a user mannerism, based on the result of the comparison.

Optionally, determining the user mannerism comprises determining a link between the user mannerism and a trigger event or a trigger input in the input data.

The method may comprise associating the updated pose and/or animation, or the new pose and/or animation, with the determined trigger event or trigger input.

Optionally, the method further comprises outputting the updated pose and/or animation, or the new pose and/or animation. Optionally, more than one updated pose and/or animation may be output.

Optionally, outputting the updated or new pose and/or animation occurs when the trigger event or trigger input is received or detected in the input data.

Optionally, the method further comprises using image recognition and/or audio recognition to determine a trigger event or input from the input data.

Optionally, the method further comprises using image recognition and/or audio recognition to determine the user mannerism.

Optionally, the method further comprises using facial tracking and/or head tracking to determine the user characteristic and/or user mannerism from the input data.

Optionally, if more than one face is detected in the input data then the method may comprise identifying the user's face. In some embodiments, face detection comprises feature recognition and/or facial recognition techniques.

Optionally, the method further comprises using audio recognition and/or speech recognition to determine the user characteristic and/or user mannerism from the input data.

Optionally, outputting the updated or the new pose and/or animation may comprise modifying at least one of a live state of the virtual avatar or the updated or new pose and/or animation to avoid a potential conflict. The live state of the avatar may be referred to as the live virtual avatar.

Optionally, modifying the live state of the virtual avatar or the updated new pose and/or animation to avoid the potential conflict comprises supressing at least one feature of the live state of the virtual avatar. The suppression may be for a predetermined time period before, during and/or after applying the pose or animation.

Optionally, modifying the live state of the virtual avatar or the updated or new pose and/or animation to avoid the potential conflict comprises supressing or overriding at least one feature of the new or updated pose and/or animation.

Optionally, modifying the live state of the virtual avatar or the updated or new pose and/or animation to avoid the potential conflict comprises blending or interpolating between the live state of the virtual avatar and the updated or the new pose and/or animation.

Optionally, the method may including determining a potential conflict between a live state of the virtual avatar and the updated or new pose and/or animation.

Optionally, the user mannerism or the user characteristic includes one or more of: a facial expression; a sound; a word or a phrase spoken by the user; an emote; a pose; a breathing pattern; a gesture; and/or an action.

Optionally, the at least one input source comprises at least one primary input source configured to provide primary input data comprising images of the user and/or audio data captured from the user, and at least one secondary input source configured to provide secondary input data.

Optionally, the method further comprises characterising the primary input data using the secondary input data. Optionally, the user secondary input data comprises metadata.

Optionally, the at least one secondary input data comprises gameplay data. The game play data may be from a game the user is playing. The game may be being played on the electronic device on which the virtual avatar is displayed, or another electronic device.

In some embodiments, the electronic device may be a mobile phone, PC, tablet, headset or gaming console.

Optionally, the method further comprises associating the updated or the new pose and/or animation with an event received in the secondary input data.

Optionally, the method further comprises storing each updated pose and/or animation and/or each new pose and/or animation in a memory.

Optionally, the method further comprises; retrieving a stored update or new pose and/or animation in response to receiving the input data and applying the retrieved pose and/or animation to the virtual avatar.

Optionally, the method is implemented by a processing resource. Optionally, the step of determining the user mannerism is at least partially implemented by a data model.

Optionally, the data model includes an artificial neural network (ANN), wherein the artificial neural network is configured to use machine learning to determine the user mannerism from the input data.

Optionally, the artificial neural network is a convolutional neural network (CNN)

According to a second aspect of the present disclosure, there is provided a computing device configured to carry out the computer-implemented method of the first aspect of the disclosure.

Optionally, the computing device comprises or is in communication with an artificial neural network, wherein the artificial neural network is configured to determine the user mannerism

### Brief description of the drawings

Embodiments of this disclosure will be described hereinafter, by way of example only, with reference to the accompanying drawings in which like reference signs relate to like elements and in which:
Figure 1 is a flowchart showing a method according to an embodiment of this disclosure;
Figure 2 is a flowchart showing a method according to another embodiment of this disclosure;
Figure 3 is a schematic diagram illustrating a cloud gaming system that may be used in accordance with this disclosure; and
Figure 4 is a block diagram of one example implementation of a computing device.

### Detailed description

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description.

By applying the user mannerism to the virtual avatar, a more realistic and life-like virtual avatar is provided. The virtual avatar better matches the appearance, actions and voice of the user, as the user's mannerisms are reflected in the pose and/or animation of the virtual avatar. In this way, quirks in the user's facial expressions, stance, head movement, eye movement, laugh, yawn, breathing pattern, exclamations, and other mannerisms can be captured and the user's virtual avatar updated accordingly.

In the prior art, virtual avatars can be emotive through a series of predefined poses and/or animations. The predefined poses and/or animations may be identical each time they occur (e.g. the same laugh or yawn) regardless of the user. The method of the present disclosure allows the user's own individually unique mannerisms to be applied to their virtual avatar to create new poses and/or animations that are unique to the user.

Further, the user is not required to manually modify and update the virtual avatar, such as by selecting pose and/or animation options from a list of predefined poses and/or animations. For example, in systems of the prior art, the user may be required to manually select which laugh animation their virtual avatar displays from a list of predefined options. In the present disclosure, the virtual avatar is updated without the need for user interaction, thereby providing a more efficient method of virtual avatar personalisation.

It is understood that a user mannerism may be any habitual gesture, movement, sound or other frequent and/or unusual behaviour exhibited by the user. For example, the way a user laughs or yawns, or a frequently performed facial expression, blinking pattern or head tilt, can be identified as a user mannerism.

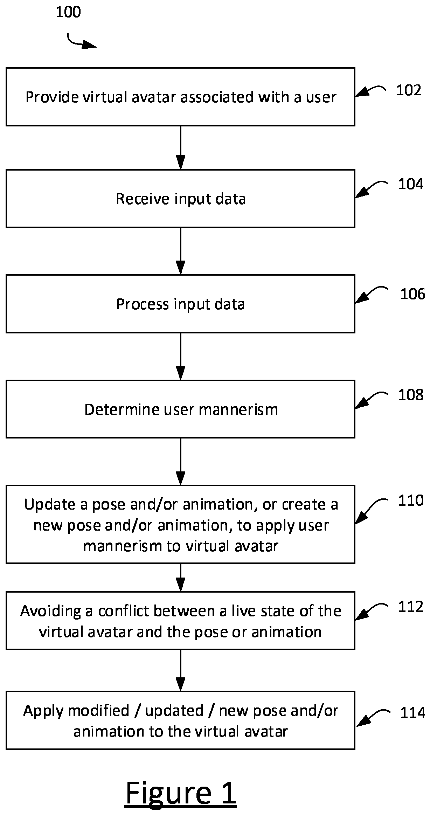

Figure 1 is a flowchart illustrating a computer-implemented method 100 for controlling a virtual avatar on an electronic device according to an embodiment of the present disclosure.

At step 102 the method comprises providing a virtual avatar associated with a user, wherein the virtual avatar is associated with a plurality of poses and a plurality of animations. The virtual avatar may be output on a display screen of a computing device.

The plurality of poses and plurality of animations may be linked to a plurality of trigger events or inputs, and/or a plurality of emotions and/or actions (e.g. including but not limited to laughing, crying, yawning, head tilting, jumping, folding arms). The plurality of poses and animations may be provided in a database. The database may be associated with the user.

At step 104 the method comprises receiving input data associated with the user from at least one input source. The input data comprises images of the user and/or audio data captured from the user. The input source may comprise a camera configured to capture images or video of the user and/or a microphone configured to capture audio from the user and/or the user's surroundings. In this way, the user's actions and emotions may be monitored in real-time during use of the electronic device.

The input data is then processed in step 106. In some embodiments, the method is implemented by a processing resource. The processing resource may include a data model.

Processing the input data may comprise identifying an emotion and or action from the input data. For example, a user's yawn, laugh, smile or frown may be identified during the processing step 106. Facial tracking may be used to identify an emotion and or action from the input data. For example, if the input data meets predetermined criteria for a 'yawn' to be identified (e.g. by tracking of facial landmarks or audio recognition of a yawning noise) then processing step 106 comprises identifying a 'yawn' action has occurred. In some embodiments, identifying an emotion and or action from the input data may form part of step 108.

In step 108, the user mannerism is determined from the processed input data. The user mannerism is understood to be any habitual gesture, movement, sound or other frequent and/or unusual behaviour exhibited by the user.

Step 108 may be implemented by a data model. Thus, at step 106 the method may comprise providing at least a portion of the input data to a data model.

The data model may comprise an artificial neural network (ANN). In some embodiments, the ANN may comprise a convolutional neural network (CNN).

ANNs (including CNNs) are computational models inspired by biological neural networks and are used to approximate functions that are generally unknown. ANNs can be hardware-based (neurons are represented by physical components) or software-based (computer models) and can use a variety of topologies and learning algorithms. ANNs can be configured to approximate and derive functions without a prior knowledge of a task that is to be performed and instead, they evolve their own set of relevant characteristics from learning material that they process. A convolutional neural network (CNN) employs the mathematical operation of convolution in at least one of their layers and are widely used for image mapping and classification applications.

In some examples, ANNs can have three layers that are interconnected. The first layer usually consists of input neurons. These input neurons send data on to the second layer, referred to a hidden layer which implements a function and which in turn sends output neurons to the third layer. With respect to the number of neurons in the input layer, this may be based on training data or reference data relating to traits of an avatar provided to train the ANN for detecting similar traits and modifying the avatar accordingly.

The second or hidden layer in a neural network implements one or more functions. There may be a plurality of hidden layers in the ANN. For example, the function or functions may each compute a linear transformation of the previous layer or compute logical functions. For instance, considering that an input vector can be represented as x, the hidden layer functions as h and the output as y, then the ANN may be understood as implementing a function of using the second or hidden layer that maps from x to h and another function g that maps from h to y. So, the hidden layer's activation is f(x) and the output of the network is g(f(x)).

To train the data model to determine a user mannerism from the input data, the data model may be provided with a plurality of training media files. The training media files may comprise images and/or audio files. In one non-limiting example, the training media files may comprise images and/or audio of people exhibiting different emotions. In one non-limiting example, the training media files may images of people in a plurality of different poses.

The training media files may in some embodiments be provided in the form of a data file or data structure or a database that includes annotations or description associated with a given training media file. For example, each training media file may have an associated label indicating what emotion, animation or pose the training media file relates to.

It will be appreciated that there are multiple methods by which a data model may be trained to use object and/or audio recognition to determine features from input image and/or audio data. The term 'feature recognition' may be used instead of object recognition.

In some embodiments, step 108 may include using facial tracking and/or head tracking to determine a user characteristic and/or user mannerism from the input data. In this way, facial landmarks and motion capture techniques can be used to determine the user characteristic and/or user mannerism from the input data. For example, facial and/or head tracking could be used to detect a change in facial expression, an action such as a laugh or frown and/or a head tilt or other pose performed by the user.

In some embodiments, determining the user mannerism comprises identifying a user characteristic from the input data and detecting a frequency of the identified user characteristic, wherein if the frequency exceeds a predetermined limit the user characteristic is determined to be a user mannerism. By detecting the frequency of the user characteristic and comparing the frequency to a predetermined limit, it can be identified whether the user characteristic is 'frequent' and therefore a mannerism or other habitual action or sound.

In one non-limiting example, a user characteristic may be sound or phrase spoken or output by the user. The predetermined limit may be a number of times (e.g. three) the sound or phrase is spoken within a predetermined period of time (e.g. ten minutes). In this non-limiting example, if the user repeats the sound or phrase at least three times within the window of ten minutes, the frequency exceeds a predetermined limit and the sound or phrase is determined to be a user mannerism.

Alternatively or additionally, determining the user mannerism at step 108 comprises identifying a user characteristic from the input data and detecting whether the user characteristic exceeds a predetermined threshold, wherein if user characteristic exceeds the predetermined threshold the user characteristic is determined to be a user mannerism.

In one non-limiting example, the user characteristic may be a 'frown' identified during the processing of step 104. The predetermined threshold may comprise a number of parameters used to characterise an emotion or other action. For example, the parameters may comprise the location of a portion of the user's mouth and/or eyebrows may be used to define the action of a `laugh', 'frown' or 'pout' or the emotion 'happy, 'sad' or 'angry'. The predetermined threshold may be met when the parameters defining the emotion or action are achieved. In the above example, a 'frown' may be achieved when the user's eyebrows are sufficiently furrowed and the user's lips are pressed together. As such, in this example, in step 104, the user mannerism of a 'frown' is determined when the predetermined threshold is met.

Optionally, determining the user mannerism at step 108 comprises comparing at least a portion of the input data to input data received from one or more other users. Comparing the user's input data to data received from other user's may allow the system or data model to determine a user mannerism from the input data. For example, to be classed as a user mannerism the feature or characteristic may be unique to the user, or not shared by more than a given number of other users.

In some embodiments, the one or more other users are linked to the present user by one or more characteristics. For example, the users may be linked by characteristics such as nationality, country of residency, age, gender and/or language/s spoken. Mannerisms may be subject to any one of these characteristics. Namely, what may be a common phrase (e.g. not a mannerism) in one demographic may be a unique or identifiable mannerism in another demographic.

In a non-limiting example, a user may be a native speaker of Spanish and may therefore repeat common Spanish phrases or exclamations. In this case, when the user is characterised by being a Spanish speaker or resident of a Spanish speaking country, these Spanish phrases or exclamations may not be identified as a user mannerism (e.g. they are commonly spoken by many users in this country and so are not unique to the user). However, if the user is a resident of a non-Spanish speaking country (e.g. UK or Japan), the common Spanish phrases or exclamations spoken by the user in Spanish may be identified as a user mannerism when the user is characterised by their residency. Namely, another user (e.g. a friend) may be easily able to identify the user by these common Spanish phrases as they are unusual in the language of the non-Spanish speaking country. Therefore, in this case, the Spanish phrases or exclamations are a mannerism of the user.

Optionally, step 108 of the method further comprises characterising at least a portion of the input data as a user mannerism based on the result of the comparison. For example, the method may comprise characterising at least a portion of the input data as a common mannerism, and therefore not a user mannerism, based on the result of the comparison. In this way, it can be determined from the input data of the one or more other users whether the user characteristic occurs frequently within the one or more other users (e.g. is a common characteristic) or whether the user characteristic is unique or unusual (e.g. not a common characteristic) relative to the input data received from one or more other users.

In step 110, at least one of the plurality of poses and/or animations of the virtual avatar is updated, or a new pose and/or animation is created, to apply the user mannerism to the virtual avatar.

For example, the virtual avatar may comprise a stock or predefined 'yawn' animation. When the user's yawn mannerism (e.g. an exaggeratedly long yawn or an unusual pitch) is determined in step 108, the predefined yawn animation of the virtual avatar can be updated to reflect the personalised user mannerism.

Thus, step 110 may comprise combining the determined user mannerism with a predefined pose and/or animation. In this way, aspects of the predefined poses and/or animations can be personalised to the user without requiring full personalisation of the pose and/or animation. In this way, computational resources can be saved while a personalised user mannerism is still provided.

In another example, the user may display a mannerism (e.g. a regularly occurring head tilt or unusual blink pattern) that is not captured by any of the predefined poses or animations associated with the virtual avatar. In this case, a new pose and/or animation may be created to reflect the user mannerism.

Optionally, the method 100 further comprises step 112 comprising avoiding a potential conflict between a live state of the virtual avatar and the at least one updated pose and/or animation or the at least one new pose and/or animation.

The live state of the virtual avatar is the virtual avatar that is currently being displayed or output. The live state of the virtual avatar (or live avatar) may be updated based on live input data received from the user, such as live facial and/or head tracking. Optionally, the live state may be an idle state if no live input data is currently received from the user.

In some embodiments, the updated or new pose and/or animation may comprise an eye movement, head movement, or other action that would potentially conflict or jar with the live state of the virtual avatar.

In one non-limiting example, a yawn animation may move the virtual avatar's head downwards in a forward-facing orientation. This could result in the live virtual avatar's head being 'snapped' round into the downwards position, and/or 'snapped' back to the live position after the animation has ended, which can seem unrealistic.

To resolve this conflict, step 112 may comprise blending or interpolating between the live state of the virtual avatar and the yawn animation, to avoid the sudden changes in head position. This will make the animation appear smoother and more natural. It will be appreciated that in some embodiments this modification can be the default option, regardless of whether there is in fact a conflict.

In some embodiments, step 112 may comprise layering animations by category and then blending between animation layers dynamically at appropriate times.

In some embodiments, step 112 may comprise determining if a potential conflict exists. In this example, at step 112 the conflict may be detected if the user's (or the avatar's) live head position is outside of a predetermined threshold from the animation head position. In some embodiments, the conflict avoidance action may be automatic, regardless of whether a conflict is detected.

In another non-limiting example, the eye gaze of the live virtual avatar may be tracked to follow the user's eye gaze. A surprise pose or animation may involve moving a virtual avatar's eyes being wide open and looking in a certain direction. This could potentially clash with the live tracked eye position of the virtual avatar, which can look unsettling. To resolve this potential conflict, step 112 may comprise hiding the user's live tracked eye gaze for a predetermined time period before and after the pose or animation is applied.

In one non-limiting example, the live tracked eye gaze may be hidden behind a predefined blink animation to ensure a smooth transition into and out of the pose or animation. It will be appreciated that other features may be surprised or overridden, not just eye gaze.

Thus, step 112 may comprise modifying the pose and/or animation to avoid any potential conflict, or to avoid a detected conflict. The modified pose and/or animation, or instructions regarding the modification to avoid potential conflict, may be stored or associated with the updated or new pose and/or animation.

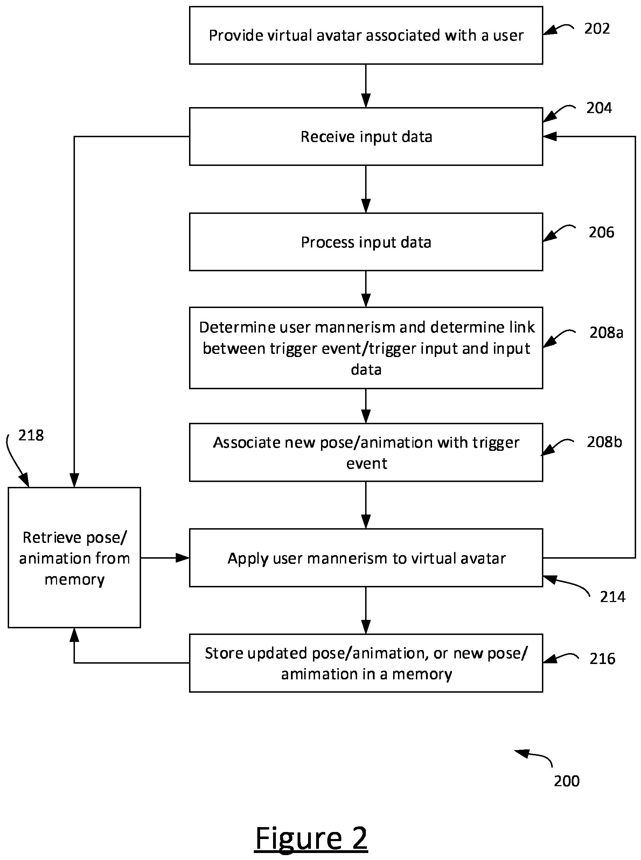

At step 114, the method comprises applying the modified, updated, or new pose or animation to the virtual avatar. The modified, updated or new pose or animation may be output in response to detection of an associated trigger event or input, which is described in more detail in Figure 2.

In some embodiments, step 114 may alternatively comprise storing the modified, updated, or new pose or animation for future use.

Figure 2 is a flowchart illustrating another computer-implemented method according to an embodiment of the present disclosure. Features which are common between Figures 1 and 2 have been numbered accordingly. Steps 202, 204 and 206 can be undertaken in the same manner as above in relation to steps 102, 104 and 106, respectively.

Determining a user mannerism from the processed input data is performed in step 208a. In addition, at step 208a a link between the user mannerism and a trigger event or a trigger input in the input data is determined.

In step 208b the updated pose and/or animation, or the new pose and/or animation, is associated with the trigger event or trigger input.

For example, the trigger event or input may be the win or loss of a game, unlocking an in-game achievement or encountering a game character or second user within the game. Such events typically induce a verbal reaction or change in facial expression or pose of the user, and so user mannerisms are often displayed during these events. By determining a link between the trigger event or input and the mannerisms a user displays, the virtual avatar may be updated to reflect the user mannerism at every occurrence of the trigger event or input.

In some embodiments, the trigger event or input may be an emotion of the user, such as excitement, sadness, or anger. The emotion may be detected from the input data received, which may include images or facial tracking data, audio data and/or other inputs. The user emotion may be determined by a data model.

In some embodiments, the method further comprises using audio recognition and/or speech recognition to determine the user characteristic and/or user mannerism from the input data in step 208a. Audio recognition and/or speech recognition allow sounds and/or words to be detected from the audio data received and/or allow recognition of a user or users from their voice detected in the audio data. In this way, phrases and other unique or unusual noises can be detected and this data subsequently used to determine that the phrase or noise is a user characteristic or user mannerism (e.g. a distinct laugh). Further, the audio recognition and/or speech recognition can be used alongside image data to further characterise the user characteristic and/or user mannerism.

In a non-limiting example, the user may have a distinct sneeze which can be detected by audio recognition (e.g. a sneezing noise is detected) and image data (e.g. the user's eyes close and the user's hands cover a portion of their nose and/or mouth). The sneeze action and/or sound may be determined to be a user mannerism.

In some embodiments, audio recognition and/or speech recognition may be used in step 208a to determine the trigger event or input to be associated with the user mannerism.

In step 214, at least one of the plurality of poses and/or animations of the virtual avatar is updated, or a new pose and/or animation is created, to apply the user mannerism to the virtual avatar. As such, the virtual avatar can have personalised poses and/or animations that are unique to the user and a more life-like virtual avatar can be provided.

At step 214, the updated pose and/or animation, or the new pose and/or animation is output, such that the user mannerism is applied to the virtual avatar being displayed. Thus, the user mannerism can be applied to the virtual avatar. Thus, step 214 may comprise the features of steps 110, 112 and 114 in Figure 1.

Optional step 216 comprises storing each updated pose and/or animation, or each new pose and/or animation in a memory. The memory may be any suitable memory, such as a local memory or a distributed or cloud server. Optionally, associated trigger event or input data can be stored in the memory.

If the pose or animation is already stored in the memory, then step 216 may be skipped and the method may return to step 204.

In any further iteration of the method 200, steps 206 to 208b may optionally be bypassed. Instead, step 204, wherein the input data is received, can be followed by step 218, wherein a pose and/or animation is retrieved from the memory in response to receiving the input data. The retrieved pose and/or animation can be applied to the virtual avatar in step 214.

In this way, the updated predefined pose and/or animation, or the 'new' pose and/or animation, can be retrieved from the memory and applied to a virtual avatar, for example in response to detection of an associated trigger event or input in the input data. As such, the virtual avatar is personalised to the user and a more life-like virtual avatar can be provided.

By retrieving and applying the updated predefined pose and/or an updated predefined animation retrieved from the memory, when a known trigger event or input occurs, the method 200 can recall and immediately apply the user mannerism to the virtual avatar without undertaking steps 206-208. In this way, computational power is saved.

In another example, a second user may be using an electronic device (e.g. a video game console) shared with the first user while the first user (e.g. their friend) is offline. The first user's virtual avatar may be displayed to the second user while the first user is offline. In such cases, the virtual avatar of the first user may be updated in response to trigger events or inputs without requiring the first user to be online and providing data inputs. In this way, the virtual avatar of the first user is personalised with historic data saved to the memory.

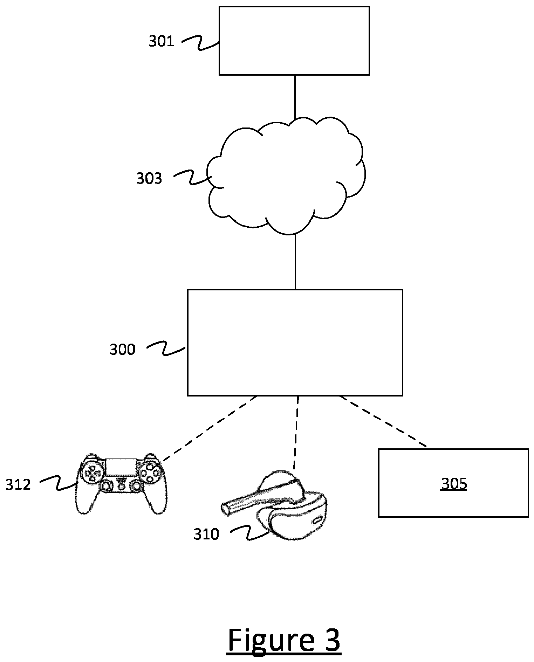

Figure 3 shows a schematic illustration of a cloud gaming system in accordance with an embodiment of the present disclosure. In Figure 3, the cloud gaming system is shown as comprising a server 301 that is in communication with a client device (or computing device) 300 via a communications network 303.

In other embodiments, the system may not comprise one or both of the server 301 or the communication network 303. Instead, the client device 300 may comprise memory and at least one processor required to execute the method of the present disclosure. Alternatively, the client device 300 may receive a non-transitory computer readable memory comprising the instructions required to execute the method of the present disclosure.

The client device 300 may include, but is not limited to, a video game playing device (games console), a smart TV, a set-top box, a smartphone, laptop, personal computer (PC), USB-streaming device, etc. The client device 300 comprises, or is in communication with, at least one source configured to obtain input data from the user.

In this embodiment, the at least one source includes an extended reality display device (PS VR^{®} headset) 310, an input device 312 (DualShock 4 ^{®}), and a camera 305. It will be appreciated that the input sources are not limited to these examples, which are provided for illustrative purposes only. A different number of, and/or different types of input sources may be provided. The input sources may be in communication with the client device 300 via a wired or wireless connection.

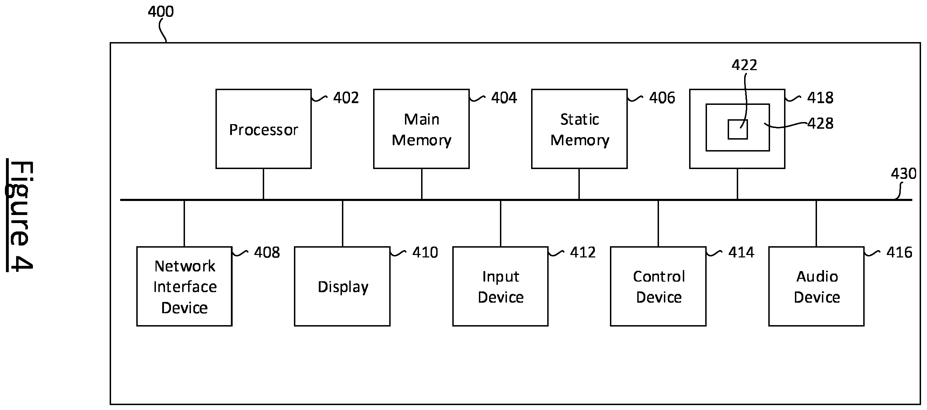

Figure 4 illustrates a block diagram of one example implementation of a computing device 400 that can be used for implementing the method shown in Figures 1 and 2 and described throughout the detailed description. The computing device is associated with executable instructions for causing the computing device to perform any one or more of the methodologies discussed herein. In alternative implementations, the computing device 400 may be connected (e.g., networked) to other machines in a Local Area Network (LAN), an intranet, an extranet, or the Internet. Optionally, a plurality of such computing devices may be used. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 400 includes a processing device 402, a main memory 404 (e.g., read-only memory (ROM), flash memory, dynamic random-access memory (DRAM) such as synchronous DRAM (SDRAM) or Rambus DRAM (RDRAM), etc.), a static memory 404 (e.g., flash memory, static random-access memory (SRAM), etc.), and a secondary memory (e.g., a data storage device 418), which communicate with each other via a bus 430.

Processing device 402 represents one or more general-purpose processors such as a microprocessor, central processing unit, or the like. More particularly, the processing device 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 402 may also be one or more special-purpose processing devices such as an application specific integrated circuit (ASIC), a field programmable gate array (FPGA), a digital signal processor (DSP), network processor, or the like. Processing device 402 is configured to execute the processing logic (instructions 422) for performing the operations and steps discussed herein.

The computing device 400 may further include a network interface device 408. The computing device 400 also may include a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 414 (e.g., a speaker).

The data storage device 418 may include one or more machine-readable storage media (or more specifically one or more non-transitory computer-readable storage media) 428 on which is stored one or more sets of instructions 422 embodying any one or more of the methodologies or functions described herein. The instructions 422 may also reside, completely or at least partially, within the main memory 404 and/or within the processing device 402 during execution thereof by the computer system 400, the main memory 404 and the processing device 402 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Accordingly, there has been described computer-implemented systems and methods for controlling a virtual avatar on an electronic device, the computer-implemented method comprising providing a virtual avatar associated with a user, wherein the virtual avatar is associated with a plurality of poses and a plurality of animations; receiving input data associated with the user from at least one input source; processing the input data, the input data comprising images of the user and/or audio data captured from the user; determining a user mannerism from the processed input data; and updating at least one of the plurality of poses and/or animations of the virtual avatar, or creating a new pose and/or animation, to apply the user mannerism to the virtual avatar.

It is to be understood that the above description is intended to be illustrative, and not restrictive. Many other implementations will be apparent to those of skill in the art upon reading and understanding the above description. Although the disclosure has been described with reference to specific example implementations, it will be recognized that the disclosure is not limited to the implementations described but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method for controlling a virtual avatar on an electronic device, the method comprising:
providing a virtual avatar associated with a user, wherein the virtual avatar is associated with a plurality of poses and a plurality of animations;
receiving input data associated with the user from at least one input source;
processing the input data, the input data comprising images of the user and/or audio data captured from the user;
determining a user mannerism from the processed input data; and
updating at least one of the plurality of poses and/or animations of the virtual avatar, or creating a new pose and/or animation, to apply the user mannerism to the virtual avatar.

2. The computer-implemented method of claim 1, wherein determining the user mannerism comprises:
identifying a user characteristic from the input data; and
detecting a frequency of the identified user characteristic, wherein if the frequency exceeds a predetermined limit the user characteristic is determined to be a user mannerism.

3. The computer-implemented method of claim 1 or claim 2, wherein determining the user mannerism comprises comparing at least a portion of the input data to input data received from one or more other users.

4. The computer-implemented method of any preceding claim, wherein determining the user mannerism comprises:
determining a link between the user mannerism and a trigger event or a trigger input in the input data; and
associating the updated pose and/or animation, or the new pose and/or animation, with the trigger event or trigger input.

5. The computer-implemented method of claim 4, comprising using image recognition and/or audio recognition to determine a trigger event or trigger input from the input data.

6. The computer-implemented method of any preceding claim, comprising:
using facial tracking and/or head tracking to determine the user characteristic and/or user mannerism from the input data; and/or
using audio recognition and/or speech recognition to determine the user characteristic and/or user mannerism from the input data.

7. The computer-implemented method of claim 7, further comprising outputting the updated pose and/or animation, or the new pose and/or animation, wherein outputting the updated pose and/or animation, or the new pose and/or animation, comprises:
modifying at least one of a live state of the virtual avatar or the updated or new pose and/or animation to avoid a potential conflict.

8. The computer-implemented method of claim 7, wherein modifying at least one of the live state of the virtual avatar or the updated or new pose and/or animation to avoid the potential conflict comprises:
supressing at least one feature of the live state virtual avatar; and/or
overriding at least one feature of the updated or the new pose and/or animation; and/or
blending or interpolating between the live state of the virtual avatar and the updated or the new pose and/or animation.

9. The computer-implemented method of any preceding claim, wherein the at least one input source comprises at least one primary input source configured to provide primary input data comprising images of the user and/or audio data captured from the user, and at least one secondary input source configured to provide secondary input data.

10. The computer-implemented method of claim 9, further comprising characterising the primary input data using the secondary input data, optionally wherein characterising the primary input data using the secondary input data comprises associating the updated pose and/or animation, or the new pose and/or animation, with an event received in the secondary input data.

11. The computer-implemented method of claim 10, wherein the secondary input data comprises gameplay data.

12. The computer-implemented method of any preceding claim, wherein the step of determining the user mannerism is at least partially implemented by a data model.

13. The computer-implemented method of claim 12, wherein the data model includes an artificial neural network, wherein the artificial neural network is configured to use machine learning to determine the user mannerism from the input data, optionally wherein the artificial neural network is a convolutional neural network.

14. A computing device configured to carry out the computer-implemented method of any preceding claim.

15. The computing device of claim 14, wherein the computing device comprises or is in communication with an artificial neural network, wherein the artificial neural network is configured to determine the user mannerism.
